# EUROPÄISCHE PATENTANMELDUNG

(11) **EP 1 623 939 A1**
(43) Veröffentlichungstag der Anmeldung: **08.02.2006**
(21) Anmeldenummer: 05107179.3
(22) Anmeldetag: 04.08.2005
(51) Int. Cl.: B65G 33/02, B65G 33/34

(54) **Bügeltransportvorrichtung**

(30) Priorität: 04.08.2004 DE 102004037828
(71) Anmelder: Gärtner, Franz, 97656 Oberelsbach (DE)
(72) Erfinder: Gärtner, Franz, 97656 Oberelsbach (DE)
(74) Vertreter: Sommer, Peter

(57) **Zusammenfassung**

Die Erfindung betrifft eine Bügeltransportvorrichtung mit einer mittels einer Antriebseinrichtung (35, 31, 30) um eine Längsachse (3) drehbar antreibbaren Transportschnecke (2), mit der zu transportierende Hakenbügel (51) in einer Transportrichtung (5) förderbar sind, wobei, dass die Antriebseinrichtung (35, 31, 30) mit einem in Transportrichtung (5) vorderen Ende (7) der Transportschnecke (2) gekoppelt ist.

## Beschreibung

Die Erfindung betrifft eine Bügeltransportvorrichtung nach dem Oberbegriff des Anspruchs 1.

Aus dem Stand der Technik sind Bügeltransportvorrichtungen für Hakenkleiderbügel bekannt, die eine Transportschnecke besitzen, welche um ihre Längsachse drehbar antreibbar ist. Schneckengänge der Transportschnecke wirken mit Hakenbögen von zu transportierenden Kleiderbügeln zusammen, wobei die Kleiderbügel durch die Drehung der Schnecke in einer Transportrichtung bewegt werden. Üblicherweise sitzt eine Antriebseinrichtung der Schnecke in Transportrichtung am hinteren Ende der Schnecke außerhalb des Bewegungsbereichs der Hakenkleiderbügel zusammen mit dem hieran aufgehängten Gut. Die Zuführung der Kleiderbügel zur Transportschnecke erfolgt üblicherweise über Rutschbahnen, welche die Kleiderbügel im Bereich des hinteren Endes der Transportschnecke der Transportschiene zuführen. Die Rutschbahnen schließen mit der Schneckenlängsachse in der Draufsicht einen Winkel ein, der von Null verschieden ist, so dass bei der Übergabe der Kleiderbügel auf die Transportschnecke diese eine Richtungsänderung erfahren.

Eine derartige Bügeltransportvorrichtung hat den Nachteil, dass durch die erforderliche Richtungsänderung der zu transportierenden Bügel zusammen mit dem hieran aufgehängten Gut die Übergabe von der Rutschbahn auf die Transportschnecke nicht immer reibungslos funktioniert. Die Folge davon sind Stauungen und Betriebsstörungen, welche unerwünscht sind.

Aufgabe der Erfindung ist es, eine Bügeltransportvorrichtung anzugeben, bei der die Übergabesicherheit verbessert ist. Weiterhin ist es eine Aufgabe der erfindungsgemäßen Bügeltransportvorrichtung, eine Vielzahl unterschiedlicher Bügel transportieren zu können. Weiterhin soll es mit der erfindungsgemäßen Vorrichtung ermöglicht werden, die Zuführung der zu transportierenden Bügel in einer Draufsicht fluchtend zur Längsachse der Transportschnecke zu gewährleisten.

Diese Aufgabe wird mit einer Bügeltransportvorrichtung mit den Merkmalen des Anspruchs 1 gelöst. Vorteilhafte Weiterbildungen sind in den Unteransprüchen angegeben.

Im folgenden wird die Erfindung anhand der Figuren beispielhaft näher erläutert. Es zeigen:
- Figur 1:: eine perspektivische Ansicht auf eine Ausführungsform der erfindungsgemäßen Bügeltransportvorrichtung mit einer Blickrichtung auf die Antriebsseite;
- Figur 2:: eine Seitenansicht auf die erfindungsgemäße Bügeltransportvorrichtung gemäß Figur 1 mit Blickrichtung auf die Antriebsseite;
- Figur 3:: eine perspektivische Ansicht auf die der Antriebsseite gegenüberliegende Seite der Bügeltransportvorrichtung gemäß den Figuren 1 und 2;
- Figur 4:: schematisch übereinandergelegte verschiedenartige Kleiderbügel zur Erläuterung des Begriffs "Hüllhorizont";
- Figur 5:: schematisch eine Ausschnittsdarstellung der erfindungsgemäßen Bügeltransportvorrichtung mit einer Blickrichtung in Transportrichtung;
- Figur 6:: eine Ansicht auf ein freies Ende der Transportschnecke der Bügeltransportvorrichtung im Bereich der Übergaberutsche einer vorgelagerten Station;

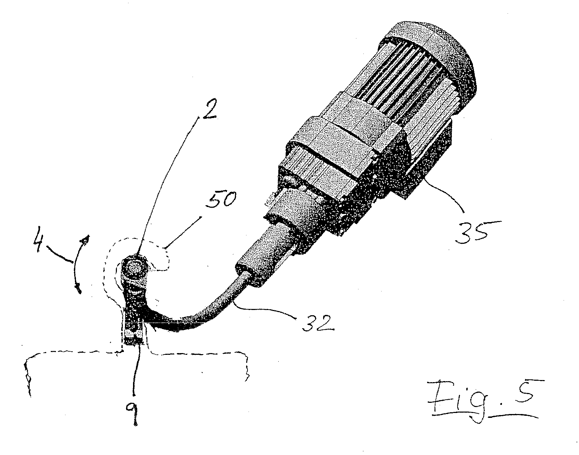

- Figur 7:: eine Explosionsdarstellung von Bestandteilen der erfindungsgemäßen Bügeltransportvorrichtung;

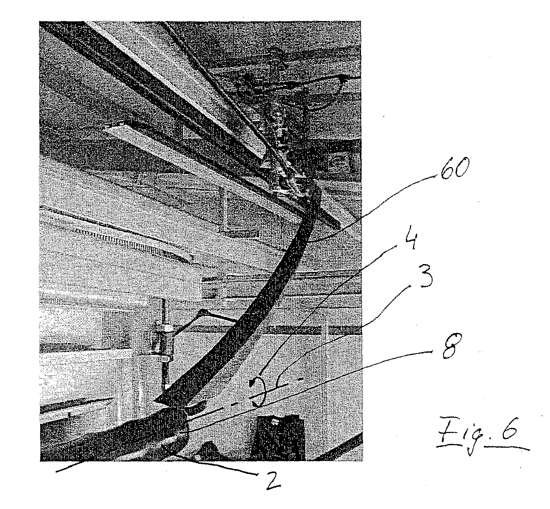

- Figur 8:: eine Ansicht auf ein Antriebsübertragungselement der erfindungsgemäßen Bügeltransportvorrichtung.

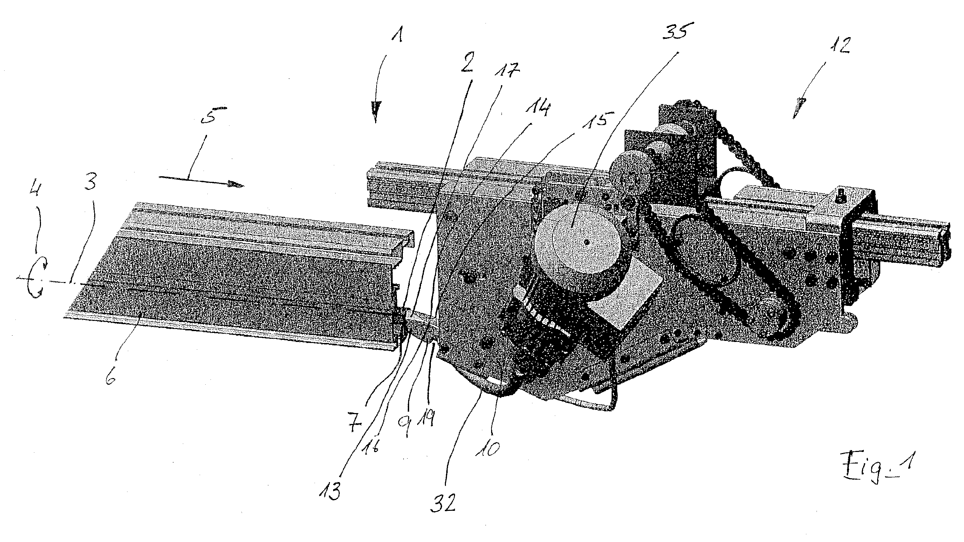

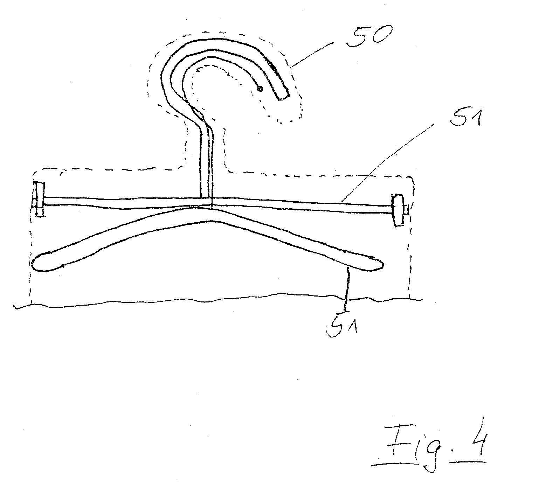

Eine erfindungsgemäße Bügeltransportvorrichtung 1 (Figur 1-3) besitzt eine Transportschnecke 2, welche um ihre Längsachse 3 in einer Doppelpfeilrichtung 4 drehbar gelagert ist. Die Transportschnecke 2 ist beispielsweise als Förder- oder als Stauschnecke ausgebildet und besitzt Schneckenwendel (nicht gezeigt), welche mit Hakenbögen von Kleiderbügeln zusammenwirken, derart, dass die Kleiderbügel bei einer Drehung der Transportschnecke 2 um ihre Längsachse 3 in einer Transportrichtung 5 bewegbar sind. Die Transportschnecke 2 ist in einer geeigneten Lagerschiene 6 drehbar gelagert, welche mittels geeigneter Befestigungselemente (nicht gezeigt) an einem Anlagerahmen befestigt ist. Die Transportschnecke 2 besitzt ein in Transportrichtung 5 vorderes Ende 7 und ein in Transportrichtung 5 hinteres, freies Ende 8 (vgl. Figur 6).

Auf die Transportschnecke 2 folgt in Transportrichtung 5 direkt an das vordere Ende 7 anschließend eine Rutschstange 9 (Figur 1, 2), welche an einem Wangenrahmen 10 ortfest gelagert ist. Die Rutschstange 9 besitzt eine Längsachse 11, welche gegenüber der Längsachse 3 der Transportschnecke 2 in einer Seitenansicht (Figur 2) einen Winkel α einschließt. In einer Draufsicht fluchten die Längsachsen 3 und 11, so dass diese in einer gemeinsamen vertikalen Ebene liegen. Die Rutschstange 9 führt Hakenbügel, z. B. Kleiderbügel einem der Bügeltransportvorrichtung nachgeordneten Vereinzeler 12 zu. Ein derartiger Vereinzeler ist in der deutschen Patentanmeldung 10 2004 029448.8 beschrieben.

Die Rutschstange 9 weist ein in Transportrichtung 5 hinteres freies Ende 13 auf, welches direkt benachbart zum vorderen Ende 7 der Transportschnecke 2 angeordnet ist.

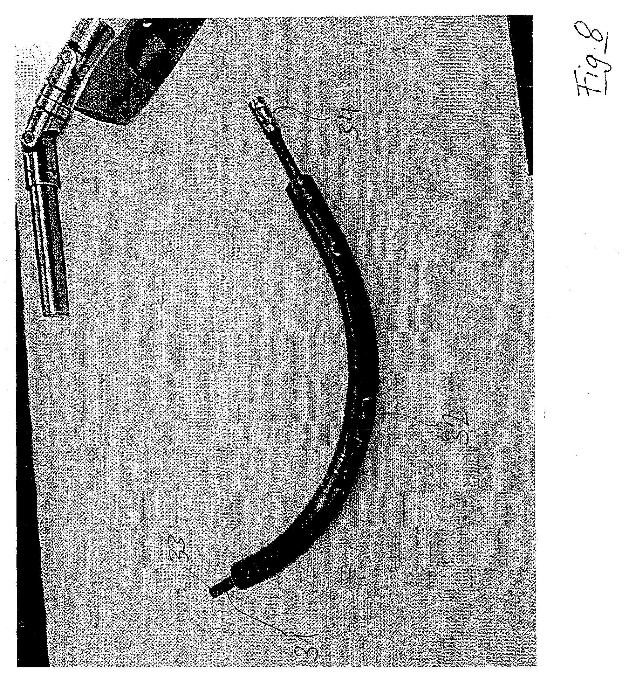

Die Rutschstange 9 besitzt eine Oberseite 14, welche von Längsoberkanten 15 und 16 begrenzt ist. Die Längsoberkanten 15, 16 sind im Übergangsbereich zur Transportschnecke 2 mit einer Anfasung 17 versehen, derart, dass ein möglichst glatter und stufenloser Übergang der Hakenbügel von der Förderschnecke 2 auf die Rutschstange 9 ermöglicht ist. Ein Stück vom freien Ende 13 in Transportrichtung 5 beabstandet besitzt die Rutschstange 9 im Bereich einer Seitenfläche 18 eine fensterartige Öffnung 19, welche sich über einen Teilbereich der Seitenfläche 18 und einer Unterseitenfläche 20 der Rutschstange 9 erstreckt. Zwischen der Öffnung 19 und dem freien Ende 13 der Rutschstange 9 besitzt die Rutschstange 9 eine Längsbohrung 21, welche als Mittelachse die Längsachse 11 hat. Die Längsbohrung 21 mündet in die fensterartige Öffnung 19 und ist in einem Teilbereich zwischen dem freien Ende 13 und der fensterartigen Öffnung 19 als Lagersitz 22, z. B. als Presssitz für Wälzlager ausgebildet (vgl. Figur 10).

Der Lagersitz 22 dient zur drehbaren Lagerung einer Antriebswelle 23, welche hierfür Wälzlager 24 trägt. Die Welle 23 besitzt an ihren freien Enden eine erste Kardangelenkeinrichtung 25 und eine zweite Kardangelenkeinrichtung 26. Die erste Kardangelenkeinrichtung 25 sitzt mit ihrem freien Gelenkende 27 in der fensterartigen Öffnung 19 und führt somit aus der Rutschstange 9 heraus. Die zweite Kardangelenkeinrichtung 26 steht mit einer Adapterstange 28 in Verbindung, welche im Inneren der Transportschnecke 2 sitzt und mit dieser drehfest verbunden ist. Somit ist es ermöglicht, eine Antriebsdrehbewegung über die erste Kardangelenkeinrichtung 25, die Welle 23, die zweite Kardangelenkeinrichtung 26 und die Adapterstange 28 auf die Transportschnecke 2 zu übertragen.

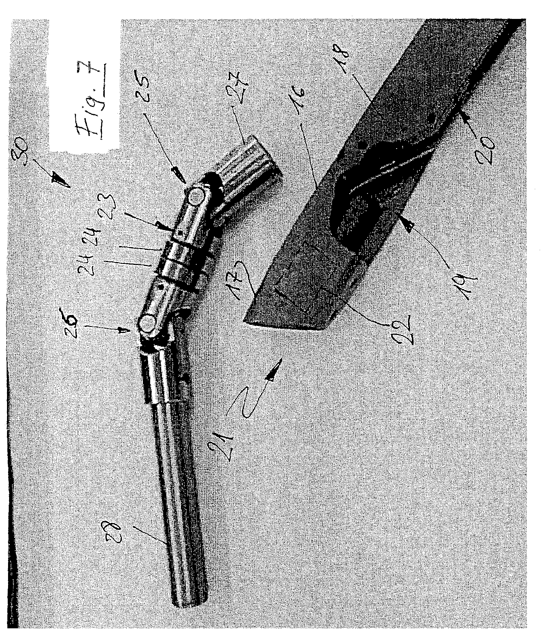

Somit ist also erfindungsgemäß die Transportschnecke 2 an ihrem im Transportrichtung 5 vorderen Ende drehbar antreibbar. Die erste Kardangelenkeinrichtung 25, die Welle 23, die zweite Kardangelenkeinrichtung 26 und die Adapterstange 28 bilden ein Antriebsübertragungselement 30, welches im Bereich des freien Gelenkendes 27 der Kardangelenkeinrichtung 25 mit einer biegsamen Welle 31 (vgl. Figur 9) verbunden ist.

Die biegsame Welle 31 verläuft in einer gebogenen starren Hülse 32 und ist in dieser drehbar gelagert. Die biegsame Welle 31 ist im Zusammenbau mit ihrem ersten Ende 33 und mit dem freien Ende 27 der Kardangelenkeinrichtung 25 gekoppelt. Mit ihrem zweiten freien Ende 34 steht die biegsame Welle 31 mit einem Antriebsmotor 35 in Verbindung.

Somit ist bei einer erfindungsgemäßen Bügeltransportvorrichtung die Förderschnecke 2 an ihrem in Transportrichtung 5 vorderen Ende über einen bezüglich der Längsachse 3 der Transportschnecke 2 und/oder bezüglich der Längsachse 11 der Rutschstange 9 abgebogenen bzw. abgewinkelten Antriebsstrang 30, 31, der aus dem Antriebsübertragungselement 30 und der biegsamen Welle 31 gebildet wird, antreibbar.

Der Verlauf des abgebogenen und/oder abgewinkelten Antriebsstranges der Transportschnecke 2 ist dabei derart gewählt, dass für alle zu transportierenden Hakenbügel mit unterschiedlichen Hakenbogengeometrien und unterschiedlichen Bügelgeometrien ein Freigang entlang der Transportrichtung 5 sichergestellt ist.

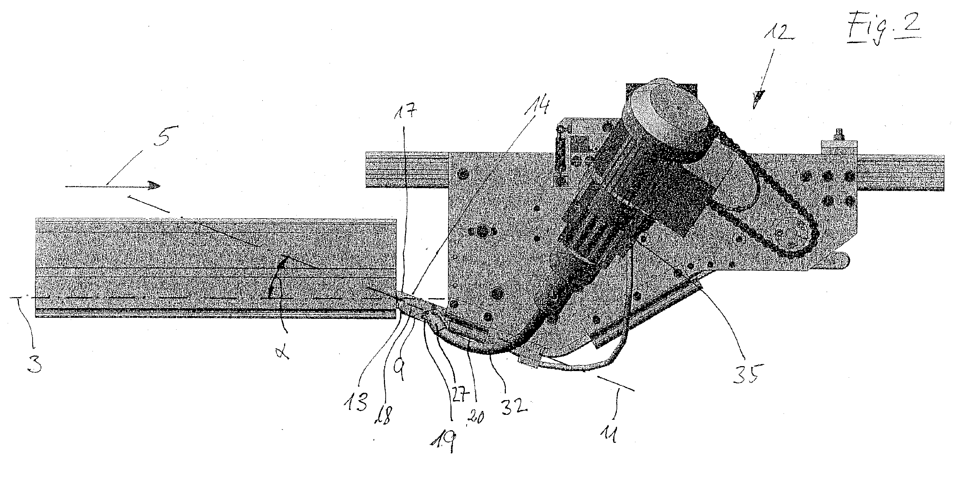

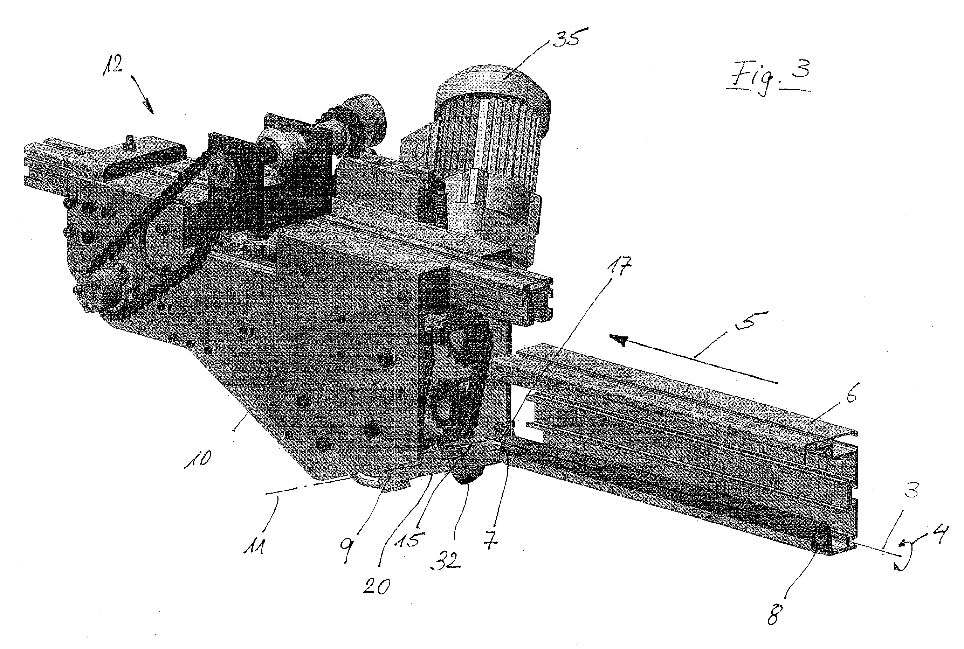

Hierzu ist das freie Ende des Antriebsübertragungselements 30, d. h. das freie Ende 27 der ersten Kardaneinrichtung 25 in einer Ansicht auf die erfindungsgemäße Bügeltransportvorrichtung in Transportrichtung 5 zunächst seitlich nach unten weg gerichtet, und zwar in Richtung der Seite, in die die Öffnungen der Hakenbögen der zu transportierenden Kleiderbügel weisen (vgl. Figur 5).

Der Verlauf des gesamten Antriebsstranges außerhalb der Rutschstange 9 ist zweckmäßigerweise derart gewählt, dass keines der Bauteile des Antriebsstranges innerhalb eines Hüllhorizontes 50 (vgl. Figur 4) aller zu transportierenden Kleiderbügel 51 liegt. Der Hüllhorizont 50 ist eine gedachte Hüllfläche, welche alle zu transportierenden Bügel umgibt und somit ein Platzhalter für den maximal notwendigen Baufreiraum der zu transportierenden Bügel entlang der Transportrichtung 5 darstellt. Zweckmäßigerweise berücksichtigt der Hüllhorizont 50 auch diejenigen unterschiedlichen Lagen der einzelnen Kleiderbügel, die beispielsweise durch ein Schaukeln des an den Bügeln hängenden Guts um die Längsachse 3 bzw. 11 hervorgerufen wird. Außerdem ist in dem Hüllhorizont 50 zweckmäßigerweise derjenige Platzbedarf der Hakenbügel berücksichtigt, welcher durch ein Drehen oder Schwenken der Bügel um eine z. B. vertikale Hochachse benötigt wird. Eine Kollision eines beliebigen Bügels mit dem Antriebsstrang der erfindungsgemäßen Bügeltransportvorrichtung ist dann zuverlässig verhindert, wenn der Verlauf des Antriebsstranges in jeder Betriebssituation zuverlässig außerhalb des Hüllhorizontes 50 liegt.

Bei der erfindungsgemäßen Bügeltransportvorrichtung 1 ist von besonderem Vorteil, dass die Übergabe von Hakenbügeln von einer vorgelagerten Station in einer Transportanlage beispielsweise über eine Rutsche 60 (vgl. Figur 6) in besonders betriebsicherer und hinsichtlich des Bauaufwandes einfacher Art und Weise von oben, in einer Draufsicht fluchtend zur Längsachse 3 der Transportschnecke 2 erfolgen kann. Somit ist eine hohe Betriebssicherheit und eine geringe Ausfallzeit der erfindungsgemäßen Bügeltransportvorrichtung im Betrieb sichergestellt.

## Patentansprüche

1. Bügeltransportvorrichtung mit einer mittels einer Antriebseinrichtung (35, 31, 30) um eine Längsachse (3) drehbar antreibbaren Transportschnecke (2), mit der zu transportierende Hakenbügel (51) in einer Transportrichtung (5) förderbar sind, **dadurch gekennzeichnet, dass** die Antriebseinrichtung (35, 31, 30) mit einem in Transportrichtung (5) vorderen Ende (7) der Transportschnecke (2) gekoppelt ist.

2. Bügeltransportvorrichtung nach Anspruch 1, **dadurch gekennzeichnet, dass** die Antriebseinrichtung (35, 31, 30) einem Antriebsstrang (31, 30) aufweist, der einen bezüglich der Längsachse (3, 11) abgewinkelten und/oder abgebogenen Verlauf aufweist.

3. Bügeltransportvorrichtung nach Anspruch 1 und/oder 2, **dadurch gekennzeichnet, dass** der Antriebsstrang (30, 31) eine biegsame Welle (31) aufweist.

4. Bügeltransportvorrichtung nach einem der vorangegangenen Ansprüche, **dadurch gekennzeichnet, dass** der Antriebsstrang (30, 31) ein Antriebsübertragungselement (30) aufweist, welches als Gelenkwelle mit einer Welle (23) und zumindest einer Kardangelenkeinrichtung (25, 26) ausgebildet ist.

5. Bügeltransportvorrichtung nach einem der vorangegangenen Ansprüche, **dadurch gekennzeichnet, dass** das Antriebsübertragungselement (30) in einer der Förderschnecke (2) in Transportrichtung (5) nachgeordneten Rutschstange (9) um deren Längsachse (11) drehbar gelagert ist.

6. Bügeltransportvorrichtung nach einem der vorangegangenen Ansprüche, **dadurch gekennzeichnet, dass** die Transportschnecke (2) um Ihre Längsachse (3) in einer Doppelpfeilrichtung (4) drehbar in einer Lagerschiene (6) gelagert ist.

7. Bügeltransportvorrichtung nach einem der vorangegangenen Ansprüche, **dadurch gekennzeichnet, dass** die Rutschstange (9) eine Oberseite (14) hat, welche von Längsoberkanten (15, 16) begrenzt ist, wobei die Längsoberkanten (15, 16) im Übergangsbereich zur Transportschnecke (2) mit einer Anfasung (17) versehen sind, derart, dass ein möglichst glatter stufenloser Übergang der Hakenbügel von der Transportschnecke (2) auf die Rutschstange (9) ermöglicht ist.

8. Bügeltransportvorrichtung nach einem der vorangegangenen Ansprüche, **dadurch gekennzeichnet, dass** die Längsbohrung (21) zumindest in einem Teilbereich zwischen dem freien Ende (13) und der fensterartigen Öffnung (19) als Lagersitz für Wälzlager ausgebildet ist.

9. Bügeltransportvorrichtung nach einem der vorangegangenen Ansprüche, **dadurch gekennzeichnet, dass** im Lagersitz (22) eine Antriebswelle (23) mit Wälzlagern (24) drehbar gelagert sitzt.

10. Bügeltransportvorrichtung nach einem der vorangegangenen Ansprüche, **dadurch gekennzeichnet, dass** die Welle (23) an ihren freien Enden eine erste Kardangelenkeinrichtung (25) und eine zweite Kardangelenkeinrichtung (26) hat, wobei die Kardangelenkeinrichtung (25) mit ihrem freien Gelenkende (27) in der fensterartigen Öffnung (19) sitzt und aus der Rutschstange (9) heraus führt.

11. Bügeltransportvorrichtung nach einem der vorangegangenen Ansprüche, **dadurch gekennzeichnet, dass** die zweite Kardangelenkeinrichtung (26) mit einer Adapterstange (28) in Verbindung steht, welche im Inneren der Transportschnecke (9) sitzt und mit dieser drehfest verbunden ist.

12. Bügeltransportvorrichtung nach einem der vorangegangenen Ansprüche, **dadurch gekennzeichnet, dass** die erste Kardangelenkeinrichtung (25), die Welle (23), die zweite Kardangelenkeinrichtung (26) und die Adapterstange (28) ein Antriebsübertragungselement (30) bilden, welches im Bereich des freien Gelenkendes (27) der Kardangelenkeinrichtung (25) mit einer biegsamen Welle (31) verbunden ist.

13. Bügeltransportvorrichtung nach einem der vorangegangenen Ansprüche, **dadurch gekennzeichnet, dass** die biegsame Welle (31) im Zusammenbau mit ihrem ersten Ende (33) mit dem freien Ende (27) der Kardangelenkeinrichtung (25) gekoppelt ist und mit ihrem zweiten freien Ende (34) mit einem Antriebsmotor (35) in Verbindung steht.
